# EUROPEAN PATENT SPECIFICATION

(11) **EP 3 382 587 B1**
(45) Date of publication and mention of the grant of the patent: **15.09.2021**
(21) Application number: 18164434.5
(22) Date of filing: 27.03.2018
(51) Int. Cl.: G06F 21/35, G06K 7/10, G06K 19/06

(54) **IDENTITY AUTHENTICATION USING A BARCODE**
IDENTITÄTSAUTHENTIFIZIERUNG UNTER VERWENDUNG EINES STRICHCODES
AUTHENTIFICATION D'IDENTITÉ À L'AIDE D'UN CODE-BARRES

(30) Priority: 29.03.2017 TW 106110440
(43) Date of publication of application: 03.10.2018
(73) Proprietor: Yang, Chien-Kang, Taipei City 10682 (TW)
(72) Inventor: Yang, Chien-Kang, Taipei City 10682 (TW)
(74) Representative: Millburn, Julie Elizabeth

(56) References cited:
- US-A1- 2002 060 246
- US-A1- 2013 313 314
- US-A1- 2016 019 536
- US-B1- 8 540 149
- DAVID KUO ET AL: "A 2D Barcode Validation System for Mobile Commerce", ADVANCES IN GRID AND PERVASIVE COMPUTING, SPRINGER BERLIN HEIDELBERG, BERLIN, HEIDELBERG, vol. 6104, 10 May 2010 (2010-05-10), pages 150-161, XP019142117, ISBN: 978-3-642-13066-3

## Description

The disclosure relates to a method for identity authentication, and more particularly to a method for identity authentication using a barcode.

In daily lives, various identity documents are required on different occasions. For example, a cash withdrawal in a bank may require an identity card, boarding a flight requires a passport, an appointment with a doctor may require a National Health Insurance IC card, and a driver's license is required for a roadside vehicle check. Each of the above exemplary identity documents is an individual document, and as a result, a person may be required to carry around multiple identity documents.

It may be desirable to digitize the multiple identity documents into digital files, and to store the digital files in a portable electronic device (e.g., a cell phone). In this way, the risk of missing one or more of the identity documents may be reduced, and the inconvenience caused by the combined size of the multiple cards may be eliminated.

It is noted that however, in the case of using a digitized identity document, there may be an issue of making sure that the digitized identity document really belongs to the person who holds the digitized identity document, since the digitized identity document may be altered, and the portable electronic device itself may be stolen.

A number of prior art documents are known.

US2002/060246 discloses a system in which a user is provided with a secure database containing information in diverse categories that relates to the user and that may be represented at least in part in bar code form and communicated with light from a mobile communications device. The diverse information is obtained from any combination of a variety of vendor and governmental computer systems, internet service providers, and communications devices. The user has access to the database using a mobile communications device for displaying, managing, and entering information, and for communicating information in bar code form with light. The user first selects the category that contains the specific item of information, and then selects the specific item of information. The specific item of information then is communicated in bar code form with light from the mobile communications device for scanning by a bar code scanner to obtain the desired good or service.

US2013/313314 discloses an anti-counterfeiting system and method for an e-ticket. The anti-counterfeiting system includes a ticket service center, a handheld device, a ticket checking device, and a database. The ticket checking device identifies the e-ticket information shown on a display of the handheld device at least twice. The e-ticket is verified by using the handheld device to execute a ticket software including an e-ticket service. The handheld device obtains at least one e-ticket information from the ticket service center via a network link. When the display of the handheld device shows that the e-ticket information is read by the ticket checking device and is verified by the database, the ticket service center transmits an e-ticket verification information to the handheld device, and the display of the handheld device then shows the e-ticket information for the ticket checking device to check again.

The paper by David Kuo et al entitled "A 2D Barcode Validation System for Mobile Commerce" discusses a mobile-based 2D barcode validation system.

US8540149 discusses an active barcode authentication system and an authentication method thereof, which actively provides an encrypted message barcode and can authenticate the ID of a user who holds a portable device, to avoid portable information being copied or stolen.

We have appreciated that it would be desirable to provide a method for identity authentication for authenticating both a digital identification and a holder holding the digital identification.

### SUMMARY OF THE INVENTION

The invention is defined by the independent claims to which reference should now be made. Advantageous features are set forth in the dependent claims.

### DETAILED DESCRIPTION OF THE DRAWINGS

Other features and advantages of the disclosure will become apparent in the following detailed description of the embodiments with reference to the accompanying drawings, of which:
Figure 1 is a flow chart illustrating steps of a method for identity authentication according to one embodiment of the disclosure;
Figure 2 is a block diagram illustrating a portable electronic device, an identification device, and an authentication server according to one embodiment of the disclosure;
Figure 3 is a block diagram illustrating the buyer device connected to the hardware security module, which is a smart card, according to one embodiment of the disclosure;

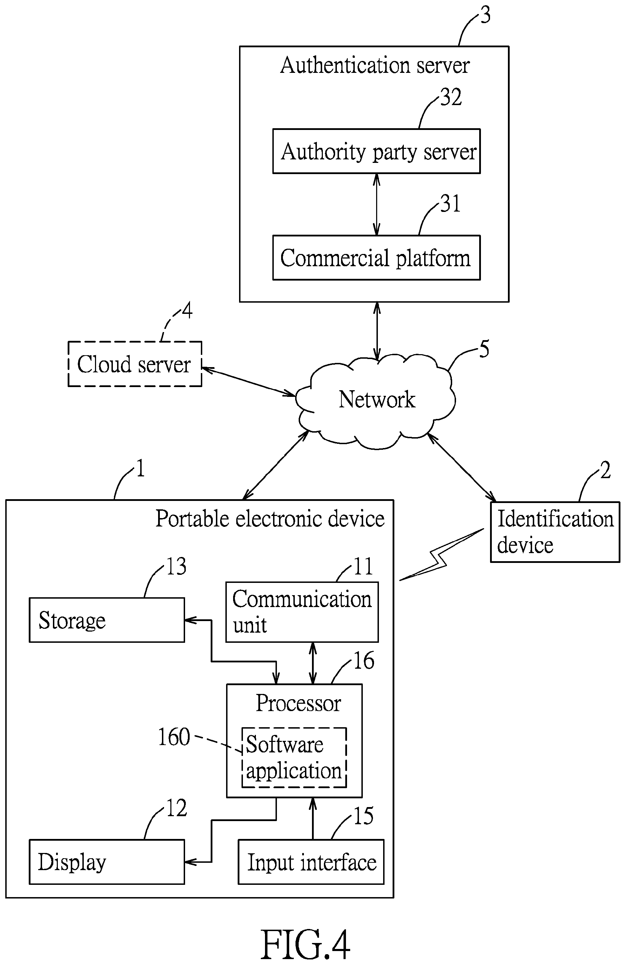

Figure 4 is a block diagram illustrating a portable electronic device, an identification device, and an authentication server according to one embodiment of the disclosure;
Figure 5 illustrates a quick response code displayed by the portable electronic device; and
Figures 6 and 7 illustrate two forms of identification information associated with an identity document.

### EXAMPLE EMBODIMENTS

Before the disclosure is described in greater detail, it should be noted that where considered appropriate, reference numerals or terminal portions of reference numerals have been repeated among the figures to indicate corresponding or analogous elements, which may optionally have similar characteristics.

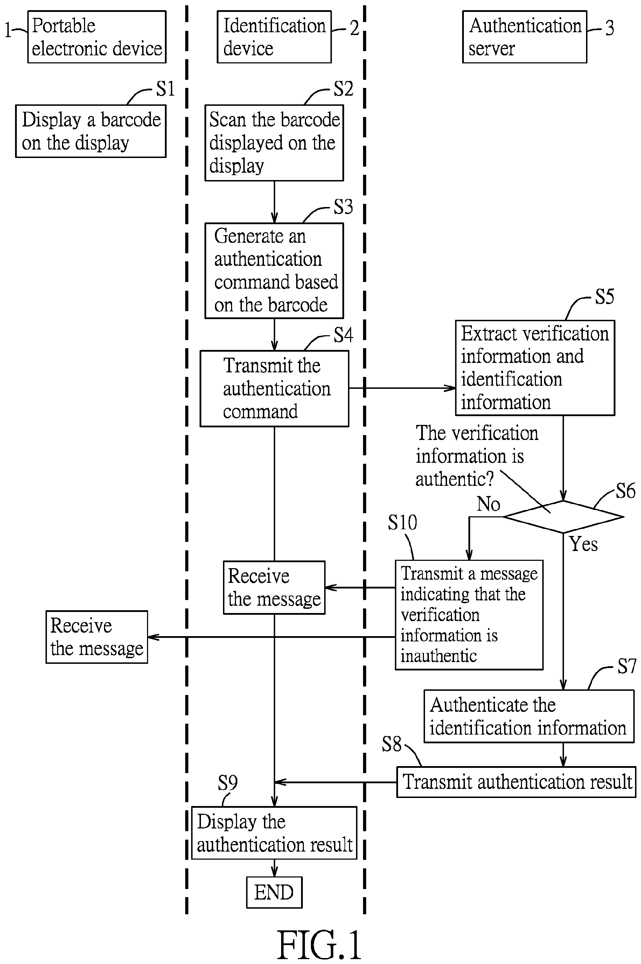

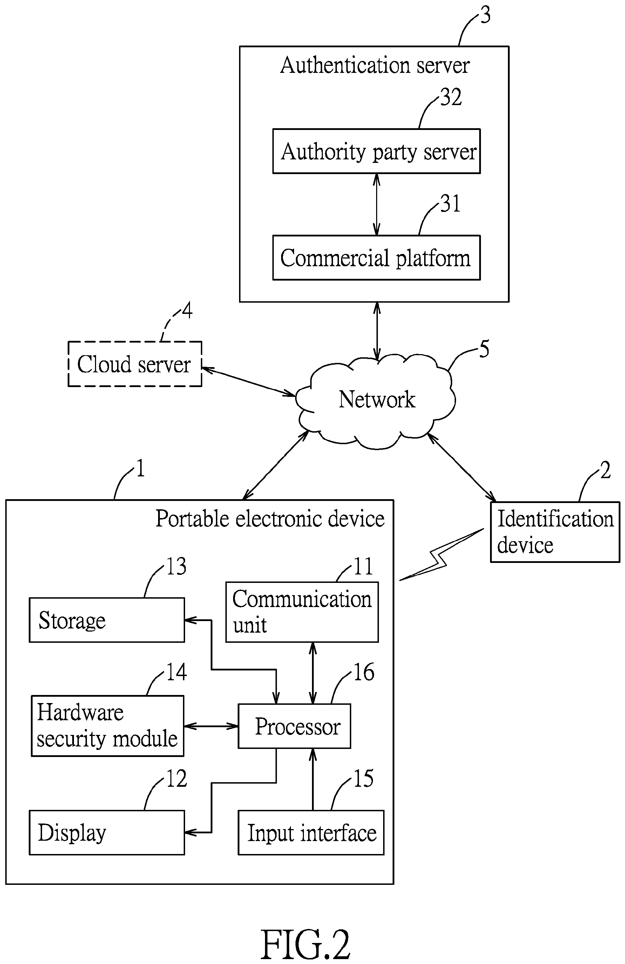

Figure 1 is a flow chart illustrating steps of a method for identity authentication according to one embodiment of the disclosure. Figure 2 is a block diagram illustrating a portable electronic device 1, an identification device 2 and an authentication server 3 cooperating to implement the method for identity authentication as illustrated in Figure 1.

In this embodiment, the portable electronic device 1 is held by a holder, and may be embodied by a mobile phone, a tablet computer, or other portable electronic devices with wireless connectivity.

As shown in Figure 2, the portable electronic device 1 includes a processor 16, a communication unit 11, a display 12, a storage 13, and an input interface 15. In this embodiment, a hardware security module 14 is installed on and accessible by the portable electronic device 1. The hardware security module 14 is implemented by hardware, and may be embodied using one of a stand-alone, external portable device (e.g., a smart card) removably connected to the portable electronic device 1 and a physical built-in module (e.g., a chip) embedded in the portable electronic device 1. In general, the hardware security module 14 includes a processing component for performing computations, and a physical storage for storing data therein. An exemplary smart card may be embodied using one as disclosed in European Patent No. EP2521081.

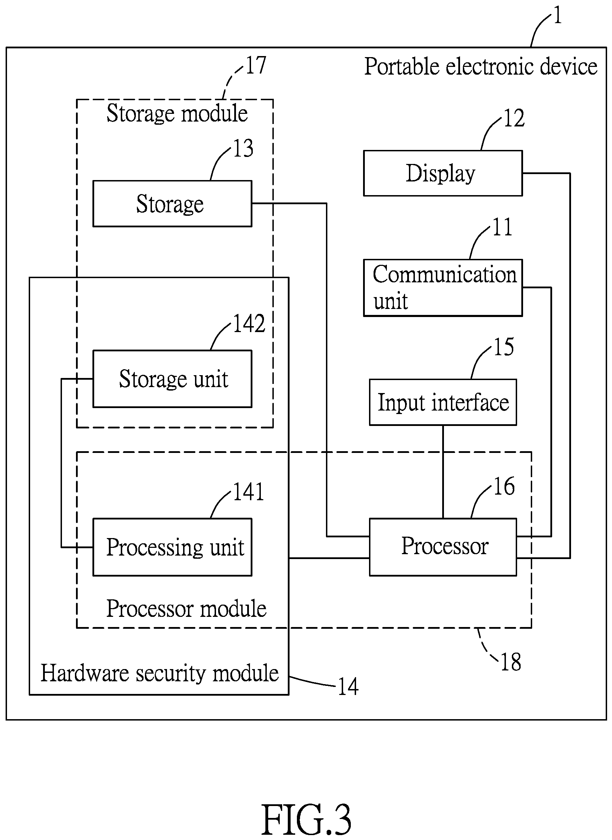

It is noted that in embodiments where the hardware security module 14 is omitted or when the hardware security module 14 is not available for connection with the portable electronic device 1, and the functionalities of the hardware security module 14 may be performed by the portable electronic device 1 executing a software application 160, as seen in Figure 3. Alternatively, the hardware security module 14 and the software application 160 may both be included in the portable electronic device 1.

Figure 3 is a block diagram illustrating the portable electronic device 1 connected to the hardware security module 14, which is a smart card, according to one embodiment of the disclosure. In this embodiment, the hardware security module 14 includes a processing unit 141 and a storage unit 142. In this way, the buyer device may be said to include a storage module 17 that includes the storage 13 and the storage unit 142. Moreover, the buyer device 1 may be said to include a processor module 18 that includes the processor 16 and the processing unit 141.

The communication unit 11 may be a component that supports wireless communication such as cellular connection, Wi-Fi, Bluetooth®, etc. The display 12 may be embodied using a display screen (e.g., an LCD screen). The storage 13 may be embodied using a physical memory device such as a non-volatile random access memory (NVRAM), e.g., a flash memory. The input interface 15 may be incorporated with the display screen to together form a touch screen.

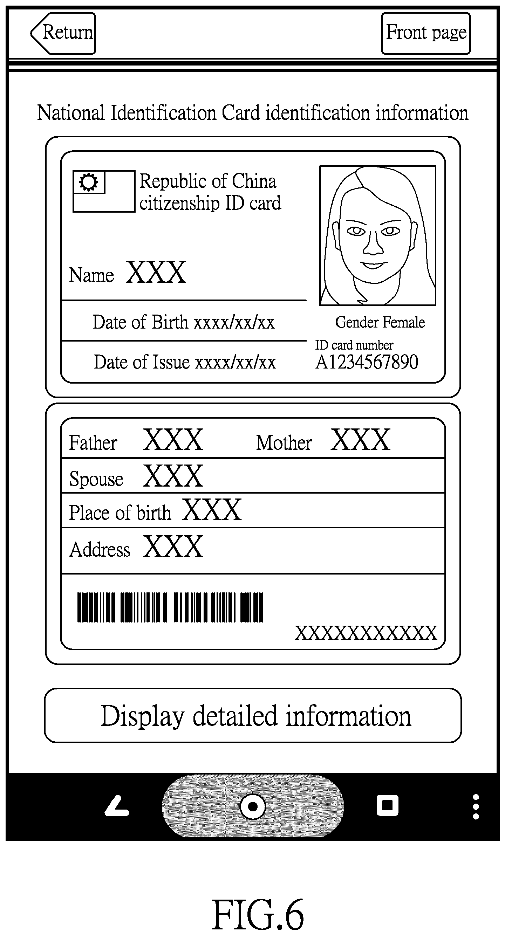

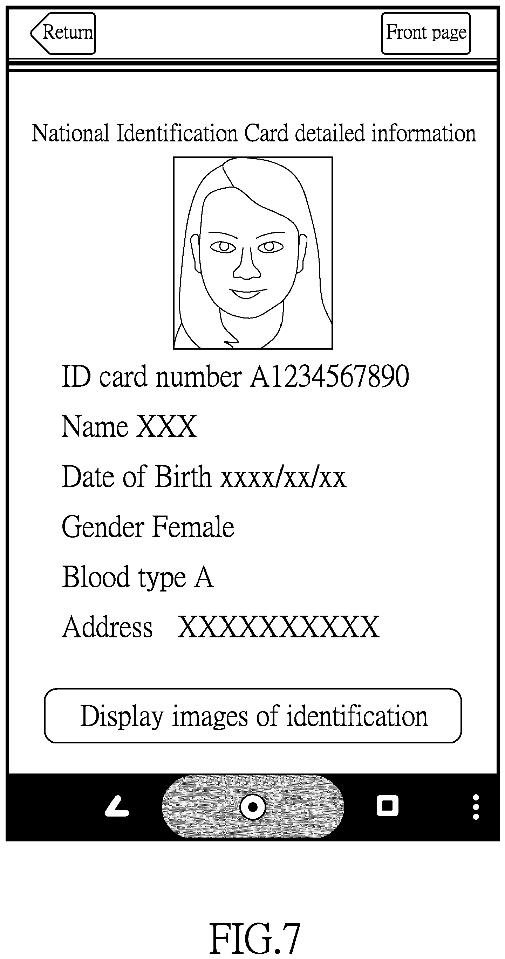

The portable electronic device 1 may be associated with one or more digital identifications corresponding to one or more identity documents, and may store identification information that is associated with an identity of the holder of the portable electronic device 1. Throughout the disclosure, the term "identity document" may be a physical card or paper issued by an authority party, such as a government agency, for providing certification for identity of a person. The term "digital identification" may be a digital data file that is stored in the storage 13 and that includes at least one image of a corresponding identity document (e.g., two images of opposite sides of a National Identification Card issued in Taiwan as shown in Figure 6), text data regarding information listed on the identity document (e.g., a name, an identification card number, date of birth, gender, a registered address of the holder, as shown in Figure 7), or other information relevant to the holder. Other examples of the identity document may include a passport, a National Health Insurance IC card, a driver's license, etc. In some cases, a plurality of digital identifications, each corresponding with an identity document (e.g., an identification card, a passport or a driver's license, etc.), may be stored in the portable electronic device 1.

The term "identification information" may refer to a data set, for example in the form of a string of numbers and/or alphabets, that is associated exclusively with the user of the portable electronic device 1. For example, an identification card number or a virtual account number may serve as the identification information. It is noted that, each of the digital identifications may contain specific data (e.g., a serial number assigned by the authority party) that is unique, and that may be employed to serve as the identification information in some embodiments. Alternatively, in some implementations, the identification information may be in the form of other data uniquely associated with the identity of the holder, such as a virtual account number.

The identification device 2 may be held by a party who intends to view the identity document of the holder, and may be embodied using a personal computer, a notebook computer, a tablet computer, a mobile communication device or other electronic devices with network communication capabilities, and includes an image capturing component (not shown) (such as a camera, a barcode reader, etc.).

The authentication server 3 is capable of communicating with the portable electronic device 1 and the identification device 2 via a network 5 (e.g., the Internet), and includes a commercial platform 31 with network connectivity, and an authority party server 32 communicating with the commercial platform 31. The authority party server 32 may be owned by, operated by, or under the control of the authority party that issues one of the identity documents. For example, in cases that the identification information includes a data set that corresponds to the National Identification Card and that includes information regarding the National Identification Card, the authority party server 32 may be owned by or under the control of the Ministry of the Interior of Taiwan. It is noted that a plurality of parties that issue various identity documents may serve as the authority party that is responsible for the authority party server 32 in different embodiments.

In use, when a requesting party requires the holder of the portable electronic device 1 to present an identity document and the holder decides to present a digital identification, the holder may first initiate the method for identity authentication, so as to provide proof that the digital identification is actually associated with him/her.

To initiate the method, the holder may operate the input interface 15 of the portable electronic device 1 to input a request for displaying a barcode on the display 12.

This may be done by the holder operating the input interface 15 to generate a command for causing the processor 16 to execute the software application 160. In response to the holder's operation, in step S1, the processor 16 executes the software application 160 so as to execute a process to display a barcode on the display 12.

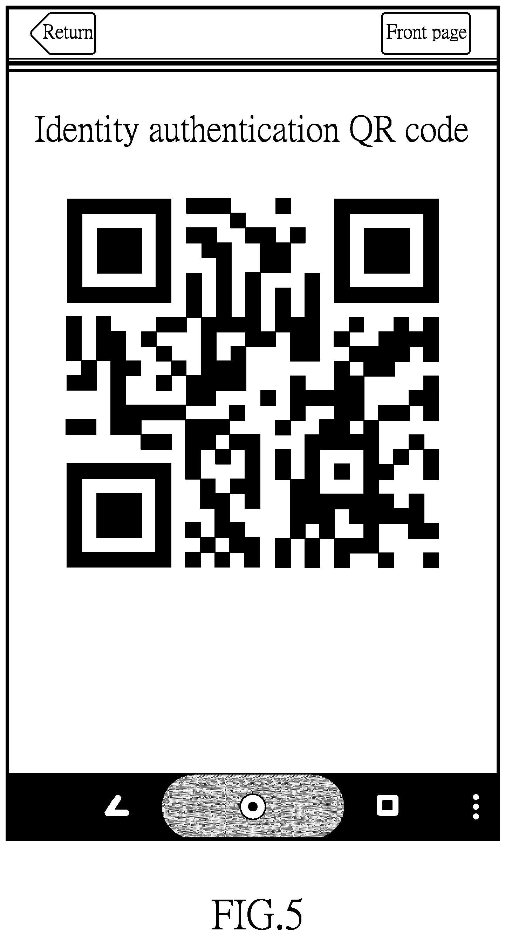

In this embodiment, the barcode may be in a form of a one-dimensional barcode (linear barcode), a two-dimensional barcode such as a quick response (QR) code (an example of which is shown in Figure 5), a three-dimensional barcode, etc., and encodes verification information for verifying an identity of the holder, and further encodes identification information corresponding to a digital identification associated with the holder.

In some embodiments, the processor 16 may require the holder to input a password using the input interface 15, and execute the process only when determining that the password inputted by the holder is correct.

In some embodiments, the barcode may be a static barcode that encodes data provided by the commercial platform 31 of the authentication server 3. For example, the data to be encoded in the static barcode may be stored in advance in the hardware security module 14 which is installed on and accessible by the portable electronic device 1. As such, the processor 16 may require the holder to input a password using the input interface 15, and transmit the password to the hardware security module 14, which verifies the password and allows the processor 16 to obtain the data stored therein for subsequent display only when the password is successfully verified (i.e., the password is verified or deemed to be correct).

Afterward, in step S2, the requesting party may operate the image capturing component of the identification device 2 to scan the barcode displayed on the display 12.

In step S3, the identification device 2 generates an authentication command based on the barcode (which is encoded with the verification information and the identification information), so that the authentication command includes the verification information and the identification information, either in encoded form or non-encoded form. Then, in step S4, the identification device 2 transmits the authentication command to the authentication server 3.

In response to receipt of the authentication command, the authentication server 3 extracts the verification information and the identification information from the authentication command in step S5. Then, in step S6, the authentication server 3 determines whether the verification information is authentic.

When it is determined that the verification information is authentic, the flow proceeds to step S7, in which the authentication server 3 executes an authentication procedure to authenticate the identification information included in the authentication command. This may be done by the authentication server 3 comparing parts or the entirety of the identification information to related information that is pre-stored in a storage of the authentication server 3.

Otherwise, the flow proceeds to step S10, in which the authentication server 3 transmits to the portable electronic device 1 and the identification device 2 a message indicating that the verification information is inauthentic, and the method is therefore terminated.

Following step S7, i.e., when the authenticating procedure ends, the flow proceeds to step S8, where the authentication server 3 transmits an authentication result to the identification device 2. In response to receipt of the authentication result, the identification device 2 may display the authentication result thereon in step S9 to inform the requesting party who holds the identification device 2 whether the digital identification is actually associated with the holder.

Then, the requesting party may request the holder to present the digital identification using the portable electronic device 1. The holder may input another command to invoke the digital identification to be displayed on the display 12. In one example shown in Figure 6, the digital identification displayed is an image of two sides of the National Identification Card of Taiwan. In one example shown in Figure 7, the digital identification displayed includes detailed information contained in the National Identification Card of Taiwan. In this embodiment, the portable electronic device 1 is capable of displaying the digital identification in both the forms illustrated in Figures 6 and 7.

In one embodiment, the authentication server 3 pre-stores the digital identification of the holder. Accordingly, in step S8, the authentication server 3 may further transmit the digital identification to the identification device 2, such that the identification device 2 may further display the digital identification in step S9.

In one embodiment, in step S8, the authentication server 3 further transmits the authentication result to the portable electronic device 1. In response to receipt of the authentication result, the portable electronic device 1 executing the application 160 may automatically display the digital identification.

It is noted that in various embodiments, the barcode may be generated in various ways before being displayed, and may include various information based on different conditions. As a result, before step S1 is performed, some operations may be carried out in different manners, and additional operations may be incorporated prior to or after step S1, as described in the following paragraphs.

According to one exemplary embodiment, the barcode is a static barcode encoding data provided by the authentication server 3. Before implementing step S1, the data to be encoded in the barcode and provided by the authentication server 3 is divided into a first part that is stored in the commercial platform 31 or a cloud server 4, and a second part that is stored in the hardware security module 14. As such, in step S1, the portable electronic device 1, by the communication unit 11 communicating with the commercial platform 31 or the cloud server 4, obtains the first part of the data, accesses the hardware security module 14 to obtain the second part of the data, combines the first part and the second part to obtain the data to be encoded in the barcode, and generates and displays the barcode based on the data.

According to one exemplary embodiment, the barcode is a static barcode encoding the data provided by the authentication server 3. Before implementing step S1, the portable electronic device 1 may communicate with the commercial platform 31 to obtain the data to be encoded in the barcode, divide the data obtained from the commercial platform 31 into a plurality of divided files, and store the divided files in the hardware security module 14. As such, in step S1, the portable electronic device 1 may access the hardware security module 14 to obtain the divided files, combine the divided files to obtain the data, and generate and display the barcode based on the data.

According to one exemplary embodiment, the barcode is a static barcode encoding the data provided by the authentication server 3. Before implementing step S1, the portable electronic device 1 may communicate with the commercial platform 31 to obtain the data to be encoded in the barcode, divide the data obtained from the commercial platform 31 into at least a first divided file and a second divided file, encrypt at least the first divided file into an encrypted file, and store the encrypted file and the second divided file in the storage 13.

As such, step S1 may include the sub-steps of the portable electronic device 1 accessing the storage 13 to obtain the encrypted file and the second divided file, displaying an instruction to require the holder to input a password, and determining whether a password inputted by the holder is correct. Further, in step S1, when it is determined that the password inputted by the holder is correct, the portable electronic device 1 decrypts the encrypted file to obtain the first divided file, combines the first and second divided files to obtain the data, and generates and displays the barcode based on the data. In some implementations, both the first divided file and the second divided file may be encrypted prior to step S1, and in step S1 both of the divided files are decrypted.

It is noted that this embodiment may be employed when the hardware security module 14 is not available, and the functionalities of the hardware security module 14 may be performed by the portable electronic device 1 executing the software application 160.

According to one exemplary embodiment, one or more digital identifications corresponding to one or more identity documents may be stored in the portable electronic device 1 and accessible by the software application 160, and then made available to the holder. In the case that the software application 160 is only associated with one digital identification (e.g., only one digital identification is stored in the portable electronic device 1), the identification information (e.g., a unique identification code, a virtual account number, or an identification card number, etc.) may be pre-stored in the hardware security module 14. In the case that the software application 160 is associated with a plurality of different digital identifications corresponding respectively to different identity documents (e.g., an identification card, a passport issued by the Ministry of Foreign Affairs, a National Health Insurance (NHI) IC card issued by the NHI Administration, and a driver's license issued by the Ministry of Transportation and Communications, etc.), the identification information may be generated by the portable electronic device 1 based on a selected one of the identity documents selected by the holder and stored in the hardware security module 14 prior to displaying the barcode. In use, the software application 160 may control the display 12 to display a selection screen, instructing the user to select one of the digital identifications that is available in the portable electronic device 1 (that is, the holder is instructed to select one of the identity documents, digitized as a digital identification, that he/she is to present to a requesting party). In response to the selected one of the digital identifications (e.g., the driver's license), the software application 160 extracts a data set of the selected one of the digital identifications that is uniquely associated with the holder (e.g., the license serial number) to serve as the identification information.

After the identification information is generated and becomes available, the portable electronic device 1 displays an instruction to require the holder to input a password. In response to receipt of a password inputted by the holder, the portable electronic device 1 requires the hardware security module 14 to verify the password. When the password is successfully verified by the hardware security module 14, the portable electronic device 1 transmits a request for an authorization parameter to the authentication server 3. In response to receipt of the authorization parameter from the authentication server 3 through the portable electronic device 1, the hardware security module 14 creates a message authentication code (MAC) for the authorization parameter using a preset key make makes the MAC serve as the verification information, dynamically generates barcode data based on the verification information, the identification information and the authorization parameter, and transmits the barcode data to the portable electronic device 1 to enable the portable electronic device 1 to display the barcode based on the barcode data.

In this embodiment, the commercial platform 31 stores the preset key and the authorization parameter. The authority party server 32 issues and stores the identification information therein (for example, the Ministry of Transportation and Communications issues the driver's license to the holder, and the server thereof stores the license serial number), and is for executing the authentication procedure.

Prior to step S1, the method further includes a step of transmitting, by the hardware security module 14 through the portable electronic device 1, a request for the authorization parameter to the commercial platform 31. In step S3, the authentication command generated by the identification device 2 further includes the authorization parameter.

Step S6 includes the following sub-steps. Firstly, the commercial platform 31 compares the authorization parameter included in the authentication command with the authorization parameter stored in the commercial platform 31. Then, in response to the determination that the authorization parameter included in the authentication command and the authorization parameter stored in the commercial platform 31 are identical, the commercial platform 31 uses the preset key stored in the commercial platform 31 to create a MAC for the authorization parameter stored in the commercial platform 31, and compares the MAC thus generated with the MAC that serves as the verification information.

When the MAC thus generated and the MAC that serves as the verification information are identical to each other, the commercial platform 31 determines that the verification information included in the authentication command is authentic.

In an alternative implementation, Step S6 includes the following sub-steps. Firstly, the authority party server 32, instead of the commercial platform 31, compares the authorization parameter included in the authentication command with the authorization parameter stored in the commercial platform 31. In response to the determination that the authorization parameter included in the authentication command and the authorization parameter stored in the commercial platform 31 are identical, the authority party server 32 uses the preset key stored in the commercial platform 31 to create a MAC for the authorization parameter stored in the commercial platform 31, and compares the MAC thus generated with the MAC that serves as the verification information. When the MAC thus generated and the MAC that serves as the verification information are identical, the authority party server 32 determines that the verification information included in the identification information is authentic.

According to one exemplary embodiment, one or more digital identifications corresponding to one or more identity documents may be stored in the portable electronic device 1 and accessible by the software application 160, and then made available for the holder. In the case that the software application 160 is only associated with one digital identification, the identification information may be pre-stored in the hardware security module 14. In the case that the software application 160 is associated with a plurality of different digital identifications corresponding respectively to different identity documents, the identification information may be generated by the portable electronic device 1 based on one of the digital identifications that is associated with a specific one of the identity documents selected by the holder in a manner similar to that described above. Further, the digital identifications may be stored in the hardware security module 14 prior to displaying the barcode.

After the identification information is available, the portable electronic device 1 displays an instruction to require the holder to input a password. In response to receipt of a password inputted by the holder, the portable electronic device 1 requires the hardware security module 14 to verify the password. When the password is successfully verified, the hardware security module 14 dynamically generates barcode data based on the verification information and the identification information, and transmits the barcode data to the portable electronic device 1 to enable the portable electronic device 1 to display the barcode based on the barcode data.

In this embodiment, the commercial platform 31 stores the verification information. The authority party server 32 issues and stores the identification information therein, and is for executing the authentication procedure. In step S6, the commercial platform 31 compares the verification information included in the authentication command with the verification information stored in the commercial platform 31.

In response to the determination that the verification information included in the authentication command and the verification information stored in the commercial platform 31 are identical, the commercial platform 31 transmits the identification information to the authority party server 32.

In step S7, the authority party server 32 authenticates the identification information received from the commercial platform 31 based on the identification information stored therein.

In an alternative implementation, the authority party server 32, instead of the commercial platform 31, stores the verification information therein. As such, in step S6, the commercial platform 31 first transmits the authentication command to the authority party server 32. In response, the authority party server 32 compares the verification information included in the authentication command with the verification information stored in the authority party server 32. In response to the determination that the verification information included in the authentication command and the verification information stored in the authority party server 32 are identical, the authority party server 32 proceeds to perform step S7 to authenticate the identification information received from the commercial platform 31 based on the identification information stored therein.

According to one exemplary embodiment, the authentication server 3 stores the identification information (included in, for example, at least one of the digital identifications) and the verification information therein. One or more digital identifications may be associated with the software application 160, and made available to the holder. In the case that the software application 160 is only associated with one digital identification, the identification information may be pre-stored in the hardware security module 14.

As such, prior to step S1, the portable electronic device 1 first transmits to the authentication server 3 a request for barcode data for displaying the barcode. In response to the request, the authentication server 3 dynamically generates the barcode data based on the identification information and the verification information stored therein.

In the case that the software application 160 is associated with a plurality of different digital identifications associated respectively with different identity documents, the identification information may be generated by the portable electronic device 1 based on one of the digital identifications that corresponds to a specific one of the identity documents selected by the holder. Further, the digital identifications may be stored in the hardware security module 14 prior to displaying the barcode.

As such, prior to step S1, the request transmitted to the authentication server 3 includes the user selection, and in dynamically generating the barcode data, the authentication server 3 reads a corresponding one of the digital identifications that corresponds to the selected one of the identity documents, and generates the barcode data based on the identification information of the corresponding one of the digital identifications and the verification information stored therein.

In this embodiment, the commercial platform 31 stores the verification information therein, and the authority party server 32 stores the identification information therein.

Prior to step S1, in response to receipt of the request, the commercial platform 31 dynamically generates the barcode data based on the identification information from the authority party server 32 and the verification information stored therein. Then, the commercial platform 31 transmits the barcode data thus generated to the portable electronic device 1.

In step S6, the determining of whether the verification information is authentic is performed by the commercial platform 31. In step S7, the authenticating of the identification information is performed by the authority party server 32.

In an alternative implementation, the authority party server 32 stores both the verification information and the identification information therein.

Prior to step S1, in response to receipt of the request, the authority party server 32 dynamically generates the barcode data based on the identification information and the verification information stored therein. Then, the authority party server 32 transmits the barcode data thus generated to the portable electronic device 1.

In step S6, the determining of whether the verification information is authentic is performed by the authority party server 32. In step S7, the authenticating of the identification information is performed by the authority party server 32.

According to one exemplary embodiment, prior to step S1, the portable electronic device 1 executing the software application 160 may transmit, via the network 5, a request for barcode data for displaying the barcode to the authentication server 3, and the barcode is a fixed barcode. Upon receipt of the barcode data, the portable electronic device 1 executing the software application 160 encrypts the barcode data and stores the encrypted barcode data in the storage 13 of the portable electronic device 1.

In step S1, in response to the request to display a barcode, the portable electronic device 1 displays an instruction to require the user to input a password. In response to receipt of a password inputted by the user, the portable electronic device 1 verifies the password. After the password is successfully verified, the portable electronic device 1 obtains the encrypted barcode data from the storage 13, decrypts the encrypted barcode data to obtain decrypted barcode data, and generates and displays the barcode based on the decrypted barcode data.

According to one exemplary embodiment, prior to step S1, the portable electronic device 1 executing the software application 160 may transmit, via the network 5, a request for barcode data for displaying the barcode to the authentication server 3, and the barcode is a fixed barcode.

Upon receipt of the barcode data from the authentication server 3, the portable electronic device 1 divides the barcode data into a first part and a second part, stores the first part of the barcode data in the storage 13, and stores the second part of the barcode data in one of the authentication server 3 and the cloud server 4. It is noted that in this embodiment, the first part of the barcode data is stored in the storage 13 at an arbitrary address of the storage 13, while in other implementations, the first part of the barcode data may be stored in a specified file directory of the storage 13 that is accessible by the software application 160, and the portable electronic device 1 executing the software application 160 is able to obtain the first part of the barcode data by accessing the file directory.

In step S1, the portable electronic device 1 accesses the one of the authentication server 3 and the cloud server 4 to obtain the second part of the barcode data, combines the first and second parts to obtain the barcode data, and generates and displays the barcode based on the barcode data.

In an alternative implementation, upon receipt of the barcode data from the authentication server 3, the portable electronic device 1 divides the barcode data into a plurality of divided files, and stores the plurality of divided files into the storage 13 of the portable electronic device 1.

In step S1, the portable electronic device 1 accesses the storage 13 to obtain the divided files, combines the divided files to obtain the barcode data, and generates and displays the barcode based on the barcode data.

In an alternative implementation, upon receipt of the barcode data from the authentication server 3, the portable electronic device 1 divides the barcode data into at least a first divided file and a second divided file. Afterward, the portable electronic device 1 encrypts at least the first divided file into an encrypted file, and stores the encrypted file and the second divided files into the storage 13.

In step S1, the portable electronic device 1 accesses the storage 13 to obtain the encrypted file and the second divided file, and displays an instruction to require the user to input a password. When a password inputted by the user is correct, the portable electronic device 1 decrypts the encrypted file to obtain the first divided file, combines the first and second divided files to obtain the barcode data, and generates and displays the barcode based on the barcode data.

According to one exemplary embodiment, the identification information is issued by the authentication server 3 and is pre-stored in the storage 13. In particular, a plurality of digital identifications corresponding respectively with a plurality of identity documents may be issued by various parties (servers) serving as the authority party servers 32. A part of data or a data set of each of the digital identifications may serve as the identification information.

Prior to step S1, the method further includes a number of steps.

First, the portable electronic device 1 displays an instruction to require the user (i.e., the holder of the portable electronic device 1) to input a password. In response to receipt of a password inputted by the user, the portable electronic device 1 verifies the password. When the password is successfully verified, the portable electronic device 1 transmits a request for an authorization parameter to the authentication server 3, and, when applicable, displays the available digital identifications for the holder to select one of the digital identifications.

Upon receipt of the authorization parameter, the portable electronic device 1 creates, using a preset key to serve, a message authentication code (MAC) of the authorization parameter to serve as the verification information, and dynamically generates the barcode based on the verification information, the identification information and the authorization parameter. It is noted that when only one digital identification is available, the corresponding part of data is used as the identification information. Otherwise, the part of data of the selected one of the digital identifications is used as the identification information.

It is noted that this embodiment may be employed when the hardware security module 14 is not available, and the functionalities of the hardware security module 14 may be performed by the portable electronic device 1 executing the software application 160.

In an alternative implementation, prior to step S1, the method further includes a number of steps. First, the portable electronic device 1 displays an instruction to require the user to input a password. Then, in response to receipt of a password inputted by the user, the portable electronic device 1 verifies the password. When the password is successfully verified, the portable electronic device 1 dynamically generates the barcode based on the verification information and the identification information.

According to one exemplary embodiment, in step S3, the identification device 2 is programmed to incorporate the barcode into the authentication command without decoding the barcode.

In step S5, the authentication server 3 is programmed to decode the barcode included in the authentication command to obtain the verification information and identification information therefrom.

In an alternative implementation, in step S3, the identification device 2 is programmed to decode the barcode to obtain the verification information and identification information therefrom, and to incorporate the verification information and identification information into the authentication command. As such, in step S5, the authentication server 3 is able to obtain the verification information and identification information directly from the authentication command.

In some embodiments, the authentication server 3 may include a plurality of commercial platforms 31 and/or a plurality of authority party servers 32, and implementation of various steps described above may be done by any one of the commercial platforms 31 and the authority party servers 32, or by both.

In some embodiments when the smart card is present, the operations in the portable electronic device 1 may be performed by the processor module 18. Specifically, the operations (i.e., various steps in the method) in the portable electronic device 1 may be performed interchangeably by one of the processor 16 and the processing unit 141. Moreover, the storage of data in the buyer device may be in the storage module 17. Specifically, the data may be stored interchangeably in one of the storage 13 and the storage unit 142.

According to one embodiment of the disclosure, there is provided a portable electronic device. The portable electronic device includes a processor, a communication unit, a display, a barcode generating module and an input interface.

The processor is programmed to, in response to detection of a user operation for requesting to display a barcode, control the display to display an instruction to require the user to input a password via the input interface, and to verify a password inputted by the user. When the password is successively verified, the processor controls the barcode generating module to generate a barcode that encodes verification information for verifying an identity of the user, and identification information for authenticating an identity of a user of the portable electronic device.

Afterward, the processor controls the display to display the barcode for scanning by an identification device, so as to enable the identification device to generate an authentication command based on the barcode, and to execute an authentication procedure with an authentication server.

In this embodiment, the barcode generating module may be embodied using one of a hardware security module (e.g., element 14 in Figure 2) and the processor (e.g., element 16 in Figure 2) executing an application (e.g., element 160 in Figure 3). Moreover, the hardware security module may be embodied using one of an external portable device removably connected to the portable electronic device, and a built-in module embedded in the portable electronic device.

According to one embodiment of the disclosure, there is provided a server device including a commercial platform for communicating with a portable electronic device and an identification device, and an authority party server communicating with the commercial platform.

The commercial platform is programmed to generate barcode data for displaying a barcode. The barcode encodes verification information for verifying authorization of access to the portable electronic device, and identification information for authenticating an identity of a user of the portable electronic device.

The commercial platform is programmed to transmit the barcode data to the portable electronic device, to receive from the identification device an authentication command based on the barcode, to extract the verification information and identification information from the authentication command, to determine whether the verification information is authentic, and to transmit the identification information to the authority party server when it is determined that the verification information is authentic.

The authority party server is programmed to, upon receipt of the identification information, authenticate the identification information, and to transmit an authentication result to the identification device. In this embodiment, the authority party server may store a plurality of identity data sets that are associated with a plurality of identity documents, respectively.

The commercial platform is programmed to, prior to generating the barcode data, in receipt of a request for the barcode data that includes a user selection indicating a selected one of the identity documents, read a corresponding one of the identity data sets that corresponds with the selected one of the identity documents, and generate the barcode data based on the corresponding one of the identity data sets of the identification information and the verification information stored therein.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure . It should be further appreciated that in the description, various features are sometimes grouped together in a single embodiment, figure, or description thereof for the purpose of streamlining the disclosure and aiding in the understanding various inventive aspects.

## Claims

1. A method for identity authentication implemented by a portable electronic device (1), an identification device (2), and an authentication server (3) communicating with the portable electronic device (1) and the identification device (2), a hardware security module (14) being installed on and accessible by the portable electronic device (1), wherein the method includes the steps of:
in response to detection of a user operation for requesting to display a barcode, displaying, by the portable electronic device (1), a barcode on a display thereof, the barcode encoding verification information and identification information that is associated with an identity of a user of the portable electronic device (1), the identification information being issued by the authentication server (3) and being stored in a storage module (17) of the portable electronic device (1), the step of displaying a barcode including:
displaying, by the portable electronic device (1), an instruction to require the user to input a password;
in response to receipt of a password inputted by the user, requiring, by the portable electronic device (1), the hardware security module (14) to verify the password;
transmitting, by the portable electronic device (1), a request for an authorization parameter to the authentication server (3) when the password is verified to be correct by the hardware security module (14);
in response to receipt of the authorization parameter from the authentication server (3), creating, by the hardware security module (14) using a preset key, a message authentication code MAC for the authorization parameter that serves as the verification information;
dynamically generating, by the hardware security module (14), barcode data for displaying the barcode based on the verification information, the identification information and the authorization parameter; and
transmitting, by the hardware security module (14), the barcode data to the portable electronic device (1); and
displaying, by the portable electronic device (1), the barcode based on the barcode data;
scanning, by the identification device (2), the barcode displayed on the display of the portable electronic device (1);
generating, by the identification device (2), an authentication command based on the barcode wherein the authentication command generated by the identification device (2) further includes the authorization parameter;
transmitting, by the identification device (2), the authentication command to the authentication server (3);
extracting, by the authentication server (3), the verification information, the identification information and the authorization parameter from the authentication command;
determining, by the authentication server (3), whether the verification information is authentic; wherein the step of determining whether the verification information received from the identification device (2) is authentic includes
comparing, by the authentication server (3), the authorization parameter included in the authentication command with the authorization parameter stored in the authentication server (3),
in response to the determination that the authorization parameter included in the authentication command and the authorization parameter stored in the authentication server (3) are identical, using the preset key stored in the authentication server (3) to create a MAC for the authorization parameter stored in the authentication server (3), and comparing the MAC thus generated with the MAC that serves as the verification information, and
determining that the verification information is authentic when the MAC thus generated and the MAC that serves as the verification information are identical;
when it is determined that the verification information is authentic, authenticating, by the authentication server (3), the identification information; and
transmitting, by the authentication server (3) to the identification device (2), an authentication result of the step of authenticating the identification information.

2. The method of Claim 1, the identification information having a plurality of identity data sets that are associated with a plurality of identity documents, respectively, **characterized in that** the identification information is further associated with a user selection of a selected one of the identity documents.

3. The method of Claim 1, **characterized in that** the storage module (17) includes a storage (13) included in the portable electronic device (1) and the storage unit (142) included in the hardware security module (14).

4. The method of Claim 1, **characterized in that**:
the step of generating an authentication command includes incorporating the barcode into the authentication command without decoding the barcode; and
the step of extracting the verification information, the identification information and the authorization parameter from the authentication command includes decoding, by the authentication server (3), the barcode included in the authentication command to obtain the verification information, the identification information and the authorization parameter therefrom.

5. The method of Claim 1, **characterized in that** the step of generating an authentication command includes steps of decoding the barcode to obtain the verification information, the identification information and the authorization parameter therefrom, and incorporating the verification information, the identification information and the authorization parameter into the authentication command.

6. A system including a portable electronic device (1), an identification device (2), and a server device (3) that is capable of communicating with said portable electronic device (1) and said identification device (2) via a network (5),
said portable electronic device (1) including: a display (12) for displaying a barcode;
an input interface (15) allowing a user to input a password;
a barcode generating module coupled to said input interface (15) for receiving therefrom the password inputted by the user, and programmed to
verify the password, and
when the password is successfully verified, generate a barcode encoding verification information and identification information that is associated with an identity of the user; and
a processor (16) electrically connected to said display (12), operatively associated with said barcode generating module for receiving the barcode therefrom, and programmed to control said display (12) to display the barcode for scanning by said identification device (2),
wherein said identification device (2) configured to generate an authentication command based on the barcode and to transmit the authentication command to said server device (3),
wherein said server device (3) configured to extract the verification information and the identification information from the authentication command, determine whether the verification information is authentic, authenticate the identification information when it is determined that the verification information is authentic, and transmit an authentication result of the authenticating of the identification information to said identification device (2)
wherein a hardware security module (14) is installed on and accessible by said portable electronic device (1), the identification information is issued by said authentication server (3) and is stored in a storage module (17) of the portable electronic device (1),
wherein, in displaying a barcode: said portable electronic device (1) is configured to display an instruction to require the user to input a password;
in response to receipt of a password inputted by the user, said portable electronic device (1) is configured to request said hardware security module (14) to verify the password;
said portable electronic device (1) is configured to transmit a request for an authorization parameter to said authentication server (3) when the password is verified to be correct by said hardware security module (14);
in response to receipt of the authorization parameter from said authentication server (3), said hardware security module (14) is configured to create, using a preset key, a message authentication code MAC for the authorization parameter that serves as the verification information;
said hardware security module (14) is configured to dynamically generate barcode data for displaying the barcode based on the verification information, the identification information and the authorization parameter; and
said hardware security module (14) is configured to transmit the barcode data to said portable electronic device (1); and
said portable electronic device (1) is configured to display the barcode based on the barcode data;
wherein the authentication command generated by said identification device (2) further includes the authorization parameter; and wherein:
in determining whether the verification information received from said identification device (2) is authentic:
said authentication server (3) is configured to compare the authorization parameter included in the authentication command with the authorization parameter stored in said authentication server (3),
in response to the determination that the authorization parameter included in the authentication command and the authorization parameter stored in said authentication server (3) are identical, said authentication server (3) is configured to use the preset key stored in said authentication server (3) to create a MAC for the authorization parameter stored in said authentication server (3), and to compare the MAC thus generated with the MAC that serves as the verification information, and to determine that the verification information is authentic when the MAC thus generated and the MAC that serves as the verification information are identical.

7. The system of Claim 6, **characterized in that** said barcode generating module of said portable electronic device (1) is one of a hardware security module (14) installed on and accessible by said portable electronic device (1), and an application executed by said processor (16),
wherein said hardware security module (14) is one of an external portable device removably connected to said portable electronic device (1), and a built-in module embedded in said portable electronic device (1).

8. The system of Claim 6, **characterized in that** the portable electronic device (1) further includes a storage module (17) for storing the barcode data for generating the barcode.

## Patentansprüche

1. Verfahren zur Identitätsauthentifizierung, implementiert durch eine tragbare elektronische Vorrichtung (1), eine Identifikationsvorrichtung (2) und einen Authentifizierungsserver (3), der mit der tragbaren elektronischen Vorrichtung (1) und der Identifikationsvorrichtung (2) kommuniziert, ein Hardware-Sicherheitsmodul (14), das an der bzw. durch die tragbare(n) elektronische(n) Vorrichtung (1) installiert und zugänglich ist, wobei das Verfahren die folgenden Schritte beinhaltet:
als Reaktion auf die Erkennung einer Benutzeroperation zur Aufforderung, einen Strichcode anzuzeigen, Anzeigen eines Strichcodes durch die tragbare elektronische Vorrichtung (1) auf einer Anzeige davon, wobei der Strichcode Verifizierungsinformationen und Identifikationsinformationen kodiert, die einer Identität eines Benutzers der tragbaren elektronischen Vorrichtung (1) zugeordnet sind, wobei die Identifikationsinformationen vom Authentifizierungsserver (3) ausgegeben werden und in einem Speichermodul (17) der tragbaren elektronischen Vorrichtung (1) gespeichert werden, wobei der Schritt des Anzeigens eines Strichcodes Folgendes beinhaltet:
Anzeigen einer Anweisung durch die tragbare elektronische Vorrichtung (1) zum Auffordern des Benutzers zum Eingeben eines Kennworts;
als Reaktion auf den Empfang eines durch den Benutzer eingegebenen Kennworts Auffordern des Hardware-Sicherheitsmoduls (14) durch die tragbare elektronische Vorrichtung (1) zum Verifizieren des Kennworts;
Übertragen einer Anforderung eines Autorisierungsparameters durch die tragbare elektronische Vorrichtung (1) an den Authentifizierungsserver (3), wenn das Passwort durch das Hardware-Sicherheitsmodul (14) als richtig verifiziert wird;
als Reaktion auf den Empfang des Autorisierungsparameters vom Authentifizierungsserver (3) Erstellen eines Nachrichten-Authentifizierungscodes MAC durch das Hardware-Sicherheitsmodul (14), unter Verwendung eines voreingestellten Schlüssels, für den Autorisierungsparameter, der als Verifizierungsinformationen dient;
dynamisches Erzeugen, durch das Hardware-Sicherheitsmodul (14), von Strichcodedaten zum Anzeigen des Strichcodes auf Basis der Verifizierungsinformationen, der Identifikationsinformationen und des Autorisierungsparameters; und
Übertragen der Strichcodedaten an die tragbare elektronische Vorrichtung (1) durch das Hardware-Sicherheitsmodul (14); und
Anzeigen des Strichcodes auf Basis der Strichcodedaten durch die tragbare elektronische Vorrichtung (1);
Abtasten des auf der Anzeige der tragbaren elektronischen Vorrichtung (1) angezeigten Strichcodes durch die Identifikationsvorrichtung (2); und
Erzeugen eines Authentifizierungsbefehls auf Basis des Strichcodes durch die Identifikationsvorrichtung, wobei der durch die Identifikationsvorrichtung (2) erzeugte Authentifizierungsbefehl ferner den Autorisierungsparameter beinhaltet;
Übertragen des Authentifizierungsbefehls durch die Identifikationsvorrichtung (2) an den Authentifizierungsserver (3);
Entnehmen der Verifizierungsinformationen, der Identifikationsinformationen und des Autorisierungsparameters durch den Authentifizierungsserver (3) aus dem Authentifizierungsbefehl;
Bestimmen durch den Authentifizierungsserver (3), ob die Verifizierungsinformationen authentisch sind; wobei der Schritt des Bestimmens, ob die von der Identifikationsvorrichtung (2) her empfangenen Verifizierungsinformationen authentisch sind, Folgendes beinhaltet:
Vergleichen des in dem Authentifizierungsbefehl enthaltenen Autorisierungsparameters durch den Authentifizierungsserver (3) mit den im Authentifizierungsserver (3) gespeicherten Autorisierungsparametern,
als Reaktion auf das Bestimmen, dass der in dem Authentifizierungsbefehl enthaltene Autorisierungsparameter und der in dem Authentifizierungsserver (3) gespeicherte Autorisierungsparameter identisch sind, Verwenden des im Authentifizierungsserver (3) gespeicherten voreingestellten Schlüssels zum Erstellen eines MAC für den im Authentifizierungsserver (3) gespeicherten Autorisierungsparameter und Vergleichen des so erzeugten MAC mit dem MAC, der als die Verifizierungsinformationen dient, und
Bestimmen, dass die Verifizierungsinformationen authentisch sind, wenn der so erzeugte MAC und der MAC, der als die Verifizierungsinformationen dient, identisch sind;
wenn bestimmt wird, dass die Verifizierungsinformationen authentisch sind, Authentifizieren der Identifikationsinformationen durch den Authentifizierungsserver (3); und
Übertragen eines Authentifizierungsergebnisses des Schritts des Authentifizierens der Identifikationsinformationen durch den Authentifizierungsserver (3) an die Identifikationsvorrichtung (2).

2. Verfahren nach Anspruch 1, wobei die Identifikationsinformationen eine Vielzahl von Identitätsdatensätzen haben, die einer Vielzahl von Identitätsdokumenten jeweilig zugeordnet sind, **dadurch gekennzeichnet, dass** die Identifikationsinformationen ferner einer Benutzerauswahl eines ausgewählten der Identitätsdokumente zugeordnet sind.

3. Verfahren nach Anspruch 1, **dadurch gekennzeichnet, dass** das Speichermodul (17) einen Speicher (13), der in der tragbaren elektronischen Vorrichtung (1) enthalten ist, und die im Hardware-Sicherheitsmodul (14) enthaltene Speichereinheit (142) beinhaltet.

4. Verfahren nach Anspruch 1, **dadurch gekennzeichnet, dass**:
der Schritt des Erzeugens eines Authentifizierungsbefehls das Integrieren des Strichcodes in den Authentifizierungsbefehl ohne Decodieren des Strichcodes beinhaltet; und
der Schritt des Entnehmens der Verifizierungsinformationen, der Identifikationsinformationen und des Autorisierungsparameters aus dem Authentifizierungsbefehl das Decodieren des im Authentifizierungsbefehl enthaltenen Strichcodes durch den Authentifizierungsserver (3) zum Erhalten der Verifizierungsinformationen, der Identifikationsinformationen und des Autorisierungsparameters aus ihm beinhaltet.

5. Verfahren nach Anspruch 1, **dadurch gekennzeichnet, dass** der Schritt des Erzeugens eines Authentifizierungsbefehls Schritte des Decodierens des Strichcodes zum Erhalten der Verifizierungsinformationen, der Identifikationsinformationen und des
Autorisierungsparameters aus ihm und Integrieren der Verifizierungsinformationen, der Identifikationsinformationen und des Autorisierungsparameters in den Authentifizierungsbefehl beinhaltet.

6. System, das eine tragbare elektronische Vorrichtung (1), eine Identifikationsvorrichtung (2) und eine Servervorrichtung (3), die zur Kommunikation mit der genannten tragbaren elektronischen Vorrichtung (1) und der genannten Identifikationsvorrichtung (2) über ein Netzwerk (5) fähig ist, beinhaltet, wobei die genannte tragbare elektronische Vorrichtung (1) Folgendes beinhaltet: eine Anzeige (12) zum Anzeigen eines Strichcodes;
eine Eingabeschnittstelle (15), die es einem Benutzer ermöglicht, ein Kennwort einzugeben;
ein Strichcodeerzeugungsmodul, das mit der genannten Eingabeschnittstelle (15) gekoppelt ist, zum Empfangen des durch den Benutzer eingegebenen Kennworts davon, und das programmiert ist zum
Verifizieren des Kennworts und
bei erfolgreicher Verifizierung des Kennworts Erzeugen eines Strichcodes, der Verifizierungsinformationen und Identifikationsinformationen codiert, die einer Identität des Benutzers zugeordnet sind, und
einen Prozessor (16), der mit der genannten Anzeige (12) elektrisch verbunden ist, dem genannten Strichcodeerzeugungsmodul zum Empfangen des Strichcodes davon funktionell zugeordnet ist und zum Steuern der genannten Anzeige (12) zum Anzeigen des Strichcodes zum Abtasten durch die genannte Identifikationsvorrichtung (2) programmiert ist,
wobei die genannte Identifikationsvorrichtung (2) zum Erzeugen eines Authentifizierungsbefehls auf Basis des Strichcodes und zum Übertragen des Authentifizierungsbefehls an die genannte Servervorrichtung (3) konfiguriert ist,
wobei die genannte Servervorrichtung (3) zum Entnehmen der Verifizierungsinformationen und der Identifikationsinformationen aus dem Authentifizierungsbefehl, zum Bestimmen, ob die Verifizierungsinformationen authentisch sind, zum Authentifizieren der Identifikationsinformationen, wenn bestimmt wird, dass die Verifizierungsinformationen authentisch sind, und zum Übertragen eines Authentifizierungsergebnisses der Authentifizierung der Identifikationsinformationen an die genannte Identifikationsvorrichtung (2) konfiguriert ist,
wobei ein Hardware-Sicherheitsmodul (14) an der bzw. durch die genannte(n) tragbare(n) elektronische(n) Vorrichtung (1) installiert und zugänglich ist, die Identifikationsinformationen von dem genannten Authentifizierungsserver (3) ausgestellt werden und in einem Speichermodul (17) der tragbaren elektronischen Vorrichtung (1) gespeichert werden,
wobei beim Anzeigen eines Strichcodes:
die genannte tragbare elektronische Vorrichtung (1) zum Anzeigen einer Anweisung zum Auffordern des Benutzers zum Eingeben eines Kennworts konfiguriert ist;
die genannte tragbare elektronische Vorrichtung (1) zum Auffordern des genannten Hardware-Sicherheitsmoduls (14) zum Verifizieren der als Reaktion auf den Empfang eines vom Benutzer eingegebenen Kennworts konfiguriert ist;
die genannte tragbare elektronische Vorrichtung (1) zum Übertragen einer Anforderung eines Autorisierungsparameters an den genannten Authentifizierungsserver (3), wenn das Passwort durch das genannte Hardware-Sicherheitsmodul (14) als richtig verifiziert wird, konfiguriert ist;
das genannte Hardware-Sicherheitsmodul (14) konfiguriert ist zum Erstellen eines Nachrichten-Authentifizierungscodes MAC für den Autorisierungsparameter, der als Verifizierungsinformationen dient, unter Verwendung eines voreingestellten Schlüssels, als Reaktion auf den Empfang des Autorisierungsparameters von dem genannten Authentifizierungsserver (3);
das genannte Hardware-Sicherheitsmodul (14) konfiguriert ist zum dynamischen Erzeugen von Strichcodedaten zum Anzeigen des Strichcodes auf Basis der Verifizierungsinformationen, der Identifikationsinformationen und des Autorisierungsparameters; und
das genannte Hardware-Sicherheitsmodul (14) konfiguriert ist zum Übertragen der Strichcodedaten an die genannte tragbare elektronische Vorrichtung (1); und
die genannte tragbare elektronische Vorrichtung (1) konfiguriert ist zum Anzeigen des Strichcodes auf Basis der Strichcodedaten;
wobei der von der genannten Identifikationsvorrichtung (2) erzeugte Authentifizierungsbefehl ferner den Autorisierungsparameter beinhaltet; und wobei:
beim Bestimmen, ob die von der genannten Identifikationsvorrichtung (2) her empfangenen Verifizierungsinformationen authentisch sind:
der genannte Authentifizierungsserver (3) konfiguriert ist zum Vergleichen des in dem Authentifizierungsbefehl enthaltenen Autorisierungsparameters mit dem in dem genannten Authentifizierungsserver (3) gespeicherten Autorisierungsparameter,
als Reaktion auf das Bestimmen, dass der in dem Authentifizierungsbefehl enthaltene Autorisierungsparameter und der in dem genannten Authentifizierungsserver (3) gespeicherte Autorisierungsparameter identisch sind, der genannte Authentifizierungsserver (3) konfiguriert ist zum Verwenden des in dem genannten Authentifizierungsserver (3) gespeicherten voreingestellten Schlüssels zum Erstellen eines MAC für den in dem genannten Authentifizierungsserver (3) gespeicherten Autorisierungsparameter und zum Vergleichen des so erzeugten MAC mit dem MAC, der als die Verifizierungsinformationen dient, und zum Bestimmen, dass die Verifizierungsinformationen authentisch sind, wenn der so erzeugte MAC und der MAC, der als die Verifizierungsinformationen dient, identisch sind.

7. System nach Anspruch 6, **dadurch gekennzeichnet, dass** das genannte Strichcodeerzeugungsmodul der genannten tragbaren elektronischen Vorrichtung (1) eines von einem Hardware-Sicherheitsmodul (14), das an der bzw. durch die genannte(n) tragbare(n) elektronische(n) Vorrichtung (1) installiert und zugänglich ist, und einer von dem genannten Prozessor (16) ausgeführten Anwendung ist,
wobei das genannte Hardware-Sicherheitsmodul (14) eines von einer externen tragbaren Vorrichtung, die abnehmbar mit der genannten tragbaren elektronischen Vorrichtung (1) verbunden ist, und einem in der genannten tragbaren elektronischen Vorrichtung (1) eingebetteten eingebauten Modul ist.

8. System nach Anspruch 6, **dadurch gekennzeichnet, dass** die tragbare elektronische Vorrichtung (1) ferner ein Speichermodul (17) zum Speichern der Strichcodedaten zum Erzeugen des Strichcodes beinhaltet.

## Revendications

1. Procédé d'authentification d'identité mis en œuvre par un dispositif électronique portable (1), un dispositif d'identification (2) et un serveur d'authentification (3) communiquant avec le dispositif électronique portable (1) et le dispositif d'identification (2), un module de sécurité matériel (14) étant installé sur et accessible par le dispositif électronique portable (1), le procédé comportant les étapes suivantes :
en réponse à la détection d'une opération d'utilisateur demandant l'affichage d'un code-barres, l'affichage, par le dispositif électronique portable (1), sur un afficheur de celui-ci, d'un code-barres, des informations de vérification d'encodage du code-barres et d'informations d'identification associées à une identité d'un utilisateur du dispositif électronique portable (1), les informations d'identification étant délivrées par le serveur d'authentification (3) et stockées dans un module de stockage (17) du dispositif électronique portable (1), l'étape d'affichage d'un code-barres comportant :
l'affichage, par l'appareil électronique portable (1), d'une instruction exigeant de l'utilisateur qu'il saisisse un mot de passe ;
en réponse à la réception d'un mot de passe saisi par l'utilisateur, la demande, par le dispositif électronique portable (1), au module de sécurité matériel (14) de vérifier le mot de passe ;
la transmission, par le dispositif électronique portable (1), d'une demande de paramètre d'autorisation au serveur d'authentification (3) lorsque le module de sécurité matériel (14) a établi que le mot de passe est correct ;
en réponse à la réception du paramètre d'autorisation à partir du serveur d'authentification (3), la création, par le module de sécurité matériel (14) pour le paramètre d'autorisation à l'aide d'une clé prédéfinie, d'un code d'authentification de message, MAC, qui sert d'informations de vérification ;
la génération dynamique, par le module de sécurité matériel (14), de données de code-barres pour l'affichage du code-barres en fonction des informations de vérification, des informations d'identification et du paramètre d'autorisation ; et
la transmission, par le module de sécurité matériel (14), des données de code-barres au dispositif électronique portable (1) ; et
l'affichage, par l'appareil électronique portable (1), du code-barres en fonction des données de code-barres ;
le balayage, à l'aide du dispositif d'identification (2), du code-barres affiché sur l'afficheur du dispositif électronique portable (1) ;
la génération, parle dispositif d'identification (2), d'une commande d'authentification basée sur le code-barres, la commande d'authentification générée par le dispositif d'identification (2) comportant en outre le paramètre d'autorisation ;
la transmission, par le dispositif d'identification (2), de la commande d'authentification au serveur d'authentification (3) ;
l'extraction, par le serveur d'authentification (3), des informations de vérification, des informations d'identification et du paramètre d'autorisation à partir de la commande d'authentification ;
la détermination, par le serveur d'authentification (3), que les informations de vérification sont authentiques ou non ; dans laquelle l'étape de détermination que les informations de vérification reçues du dispositif d'identification (2) sont authentiques ou non comporte :
la comparaison, par le serveur d'authentification (3), du paramètre d'autorisation inclus dans la commande d'authentification au paramètre d'autorisation stocké dans le serveur d'authentification (3),
en réponse à la détermination que le paramètre d'autorisation inclus dans la commande d'authentification et le paramètre d'autorisation stocké dans le serveur d'authentification (3) sont identiques, l'utilisation de la clé prédéfinie stockée dans le serveur d'authentification (3) pour créer un MAC pour le paramètre d'autorisation stocké dans le serveur d'authentification (3), et la comparaison du MAC ainsi généré au MAC servant d'informations de vérification, et
la détermination que les informations de vérification sont authentiques lorsque le MAC ainsi généré et le MAC servant d'informations de vérification sont identiques ;
lorsqu'il est déterminé que les informations de vérification sont authentiques, l'authentification, par le serveur d'authentification (3), des informations d'identification ; et
la transmission, par le serveur d'authentification (3) au dispositif d'identification (2), d'un résultat d'authentification de l'étape d'authentification des informations d'identification.

2. Procédé selon la revendication 1, les informations d'identification comportant une pluralité d'ensembles de données d'identité associée à une pluralité de documents d'identité, respectivement, **caractérisé en ce que** les informations d'identification sont en outre associées à une sélection par l'utilisateur d'un document sélectionné parmi les documents d'identité.

3. Procédé selon la revendication 1, **caractérisé en ce que** le module de stockage (17) comporte une mémoire (13) incluse dans le dispositif électronique portable (1) et l'unité de stockage (142) incluse dans le module de sécurité matériel (14).

4. Procédé selon la revendication 1, **caractérisé en ce que** :
l'étape de génération d'une commande d'authentification comprend l'incorporation du code-barres dans la commande d'authentification sans décoder le code-barres ; et
l'étape d'extraction des informations de vérification, des informations d'identification et du paramètre d'autorisation à partir de la commande d'authentification comprend le décodage, par le serveur d'authentification (3), du code-barres inclus dans la commande d'authentification pour obtenir à partir de celui-ci les informations de vérification, les informations d'identification et le paramètre d'autorisation.

5. Procédé selon la revendication 1, **caractérisé en ce que** l'étape de génération d'une commande d'authentification comprend des étapes de décodage du code-barres pour obtenir à partir de celui-ci les informations de vérification, les informations d'identification et le paramètre d'autorisation, et d'incorporation des informations de vérification, des informations d'identification et du paramètre d'autorisation dans la commande d'authentification.

6. Système comprenant un dispositif électronique portable (1), un dispositif d'identification (2), et un dispositif serveur (3) capables de communiquer avec ledit dispositif électronique portable (1) et ledit dispositif d'identification (2) par l'intermédiaire d'un réseau (5), ledit dispositif électronique portable (1) comprenant : un afficheur (12) pour l'affichage d'un code-barres ;
une interface de saisie (15) permettant à un utilisateur de saisir un mot de passe ;
un module générateur de code-barres couplé à ladite interface d'entrée (15) pour recevoir à partir de celle-ci le mot de passe saisi par l'utilisateur, et programmé pour
vérifier le mot de passe, et
lorsque le mot de passe est vérifié avec succès, générer un code-barres qui encode des informations de vérification et des informations d'identification associées à une identité de l'utilisateur ; et
un processeur (16) connecté électriquement audit afficheur (12), associé opérationnellement audit module générateur de code-barres pour recevoir de celui-ci le code-barres, et programmé pour commander ledit afficheur (12) afin d'afficher le code-barres destiné à être balayé par ledit dispositif d'identification (2),
dans lequel ledit dispositif d'identification (2) est configuré pour générer une commande d'authentification basée sur le code-barres et transmettre la commande d'authentification audit dispositif serveur (3),
dans lequel ledit dispositif serveur (3) est configuré pour extraire les informations de vérification et les informations d'identification à partir de la commande d'authentification, déterminer que les informations de vérification sont authentiques ou non, authentifier les informations d'identification lorsqu'il est déterminé que les informations de vérification sont authentiques, et transmettre un résultat d'authentification de l'authentification des informations d'identification audit dispositif d'identification (2)
dans lequel un module de sécurité matériel (14) est installé sur et accessible par ledit dispositif électronique portable (1), les informations d'identification sont délivrées par ledit serveur d'authentification (3) et sont stockées dans un module de stockage (17) du dispositif électronique portable (1),
dans lequel, lors de l'affichage d'un code-barres :
ledit dispositif électronique portable (1) est configuré pour afficher une instruction exigeant de l'utilisateur qu'il saisisse un mot de passe ;
en réponse à la réception d'un mot de passe saisi par l'utilisateur, ledit dispositif électronique portable (1) est configuré pour demander audit module de sécurité matériel (14) de vérifier le mot de passe ;
ledit dispositif électronique portable (1) est configuré pour transmettre une demande de paramètre d'autorisation audit serveur d'authentification (3) lorsque ledit module de sécurité matériel (14) établit que le mot de passe est correct ;
en réponse à la réception du paramètre d'autorisation à partir dudit serveur d'authentification (3), ledit module de sécurité matériel (14) est configuré pour créer, pour le paramètre d'autorisation à l'aide d'une clé prédéfinie, un code d'authentification de message MAC qui sert d'informations de vérification ;
ledit module de sécurité matériel (14) est configuré pour générer dynamiquement des données de code-barres pour l'affichage du code-barres en fonction des informations de vérification, des informations d'identification et du paramètre d'autorisation; et
ledit module matériel de sécurité (14) est configuré pour transmettre les données de code-barres audit dispositif électronique portable (1) ; et
ledit dispositif électronique portable (1) est configuré pour afficher le code-barres en fonction des données de code-barres ;
dans laquelle la commande d'authentification générée par ledit dispositif d'identification (2) comporte en outre le paramètre d'autorisation ; et dans lequel :
lors de la détermination que les informations de vérification reçues dudit dispositif d'identification (2) sont authentiques ou non :
ledit serveur d'authentification (3) est configuré pour comparer le paramètre d'autorisation inclus dans la commande d'authentification au paramètre d'autorisation stocké dans ledit serveur d'authentification (3),
en réponse à la détermination que le paramètre d'autorisation inclus dans la commande d'authentification et le paramètre d'autorisation stocké dans ledit serveur d'authentification (3) sont identiques, ledit serveur d'authentification (3) est configuré pour utiliser la clé prédéfinie stockée dans ledit serveur d'authentification (3) pour créer un MAC pour le paramètre d'autorisation stocké dans ledit serveur d'authentification (3), et comparer le MAC ainsi généré avec le MAC servant d'informations de vérification, et déterminer que les informations de vérification sont authentiques lorsque le MAC ainsi généré et le MAC servant d'informations de vérification sont identiques.

7. Système selon la revendication 6, **caractérisé en ce que** ledit module générateur de codes-barres dudit dispositif électronique portable (1) est l'un d'un module de sécurité matériel (14) installé sur et accessible par ledit dispositif électronique portable (1) et d'une application exécutée par ledit processeur (16),
dans lequel ledit module de sécurité matériel (14) est l'un d'un dispositif portable externe connecté de manière amovible audit dispositif électronique portable (1) et d'un module intégré incorporé dans ledit dispositif électronique portable (1).

8. Système selon la revendication 6, **caractérisé en ce que** le dispositif électronique portable (1) comporte en outre un module de stockage (17) destiné à stocker les données de code-barres pour générer le code-barres.
